# EUROPEAN PATENT APPLICATION

(11) **EP 4 671 884 A1**
(43) Date of publication of application: **31.12.2025**
(21) Application number: 25178603.4
(22) Date of filing: 23.05.2025
(51) Int. Cl.: G05B 19/042, G06F 8/656

(54) **ON PROCESS LOOP-BY-LOOP CONTROL STRATEGY MIGRATION FROM LEGACY CONTROL SYSTEMS TO MODERN CONTROL SYSTEMS**

(30) Priority: 25.06.2024 US 202418753498
(71) Applicant: Honeywell International Inc., Charlotte, NC 28202 (US)
(72) Inventor: KRISHNAMURTHY, Ananthapadmanabha Gujjanadu, Charlotte, 28202 (US); MCLAUGHLIN, Paul, Charlotte, 28202 (US); STRILICH, James, Charlotte, 28202 (US)
(74) Representative: Haseltine Lake Kempner LLP

(57) **Abstract**

A method comprises controlling, via a first process of a process controller, the industrial process, wherein the process controller is coupled, via a communication path, to an input/output (I/O) link execution environment manager (IOL EE), the process controller comprising a microprocessor configured to host a first control execution environment to support a first set of I/O functions and corresponding control execution functions to control the industrial process; migrating a subset of the first set of I/O functions and corresponding control execution functions to a second process of the process controller to form a second set of I/O functions and corresponding control functions, wherein the microprocessor is configured to host a second control execution environment to support the second set of I/O functions and the corresponding control execution functions to control the industrial process; and controlling, via second process.

## Description

### TECHNICAL FIELD

This disclosure generally relates to industrial process control and automation systems. More specifically, this disclosure relates to an apparatus and method for on process loop-by-loop control strategy migration from legacy control system to modern control systems.

### BACKGROUND

Industrial process control and automation systems are typically used to monitor and control complex and potentially volatile industrial processes without interruption, often running without scheduled downtime for years. Over time, a need may arise to upgrade one or more components in an industrial process control and automation system. This could be due to various factors, such as the desire to obtain improvements provided by new products or the need to replace obsolete products or address support issues.

### SUMMARY

This disclosure provides an apparatus and method for on process loop-by-loop control strategy migration from legacy control system to modern control systems.

A first representative example is a method of on process loop-by-loop control migration from a legacy control system to a modern control system for control of an industrial process. The method comprising controlling, via a first process of a process controller, the industrial process, wherein the process controller is coupled, via a first communication path, to an input/output (I/O) link execution environment manager (IOL EE), the process controller comprising a microprocessor configured to host a first control execution environment to support a first set of I/O functions and corresponding control execution functions to control the industrial process; migrating a subset of the first set of I/O functions and corresponding control execution functions to a second process of the process controller to form a second set of I/O functions and corresponding control functions, wherein the microprocessor is configured to host a second control execution environment to support the second set of I/O functions and the corresponding control execution functions to control the industrial process; and controlling, via second process, the industrial process based on the second set of I/O functions and the corresponding control execution functions.

Another representative example is an apparatus. The apparatus comprising at least one processor configured to: control, via first control execution environment hosted by a first process of a process controller, an industrial process; generate a graphical user interface with information associated with a first execution environment; present, in the graphical user interface, of information representative of a first set of I/O modules and control execution functions supported by the first execution control environment to control the industrial process; receive, from a user via the graphical user interface, a selection of a subset of the first set of I/O modules and the corresponding control execution functions; perform on process migration of the selected subset of the first set of the I/O modules and the corresponding control execution functions from the first process to a second process hosted by the process controller as a second set of I/O modules and corresponding control execution functions; and control, via a second execution environment hosted by the process controller and the second set of I/O modules and corresponding control execution functions, the industrial process.

Another representative example is a process controller for an industrial process. The process controller comprising: an input/output (I/O) link execution environment manager (IOL EE); a first controller coupled, via a first communication path, to IOL EE, the first controller comprising a microprocessor configured to host a first control execution environment to support a first set of I/O modules and control execution functions for controlling the industrial process; and a second controller coupled, via a second communication path, to the IOL EE, the second controller comprising a microprocessor being configured to host a second control execution environment to support a second set of I/O functions and control execution functions for controlling the industrial process.

The preceding summary is provided to facilitate an understanding of some of the innovative features unique to the present disclosure and is not intended to be a full description. A full appreciation of the disclosure can be gained by taking the entire specification, claims, figures, and abstract as a whole. Other technical features may be readily apparent to one skilled in the art from the following figures, descriptions, and claims.

### BRIEF DESCRIPTION OF DRAWINGS

For a more complete understanding of this disclosure, reference is now made to the following description, taken in conjunction with the accompanying drawings, in which:
FIG. 1 illustrates an example industrial process control and automation system having legacy and modern control systems according to this disclosure;
FIG. 2 illustrates an example device for on process loop-by-loop control strategy migration from legacy control system to modern control systems according to this disclosure;
FIG. 3 illustrates a portion of an example process controller having a first communication path and a second communication path for on process loop-by-loop control strategy migration from legacy control system to modern control systems according to this disclosure;
FIGS. 4A, 4B, and 4C illustrate a user interface according to this disclosure; and
FIG. 5 illustrates an example method for on process loop-by-loop control strategy migration from legacy control system to modern control systems according to this disclosure.

### DETAILED DESCRIPTION

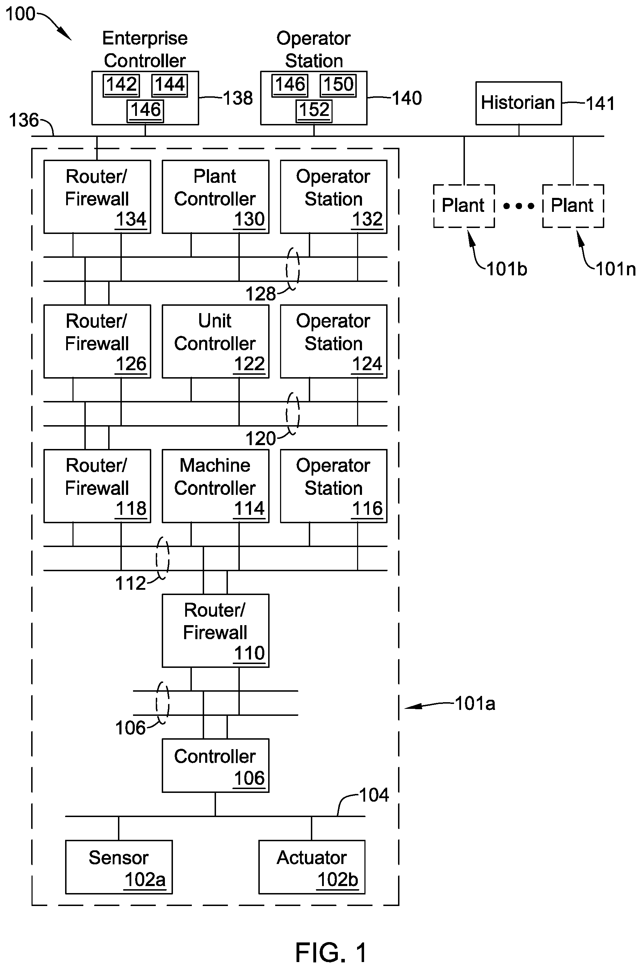

FIGS. 1 through 5, discussed below, and the various embodiments used to describe the principles of the present invention in this patent document are by way of illustration only and should not be construed in any way to limit the scope of the invention. Those skilled in the art will understand that the principles of the invention may be implemented in any type of suitably arranged device or system.

Industrial automation is an important feature of today's industrial processing plants. There is a need for industrial automation systems to continually provide greater flexibility in the implantation and operation of industrial automation systems. As detailed herein, modern controllers can permit a process controller to operate a first execution environment in parallel with a second execution environment operated by the process controller. Such parallel operation of the execution environments permits on process loop-by-loop migration (e.g., cutover) of control strategies from a first process to a second process and/or permits the on process loop-by-loop migration to occur in the absence of any changes to hardware of the process controller (e.g., without any changes to an I/O interface and/or wiring associated with the process controller), unlike like prior approaches that require downtime and production losses, necessitate rewiring various components, require physical adaptors (e.g., adaptors coupled to an I/O interface of a process controller, etc.), and/or require altering a form factor (e.g., a Series C form factor) of the process controller.

FIG. 1 illustrates an example industrial automation system 100 according to this disclosure. As shown in FIG. 1, the system 100 includes various components that facilitate production or processing of at least one product or other material. For instance, the system 100 is used here to facilitate control over components in one or multiple plants 101*a*-101*n*. Each plant 101*a*-101*n* represents one or more processing facilities (or one or more portions thereof), such as one or more manufacturing facilities for producing at least one product or other material. In general, each plant 101*a*-101*n* may implement one or more processes and can individually or collectively be referred to as a process system. A process system generally represents any system or portion thereof configured to process one or more products or other materials in some manner.

In FIG. 1, the system 100 is implemented using the Purdue model of process control. In the Purdue model, "Level 0" may include one or more sensors 102*a* and one or more actuators 102b. The sensors 102*a* and actuators 102b represent components in a process system that may perform any of a wide variety of functions. For example, the sensors 102*a* could measure a wide variety of characteristics in the process system, such as temperature, pressure, or flow rate. Also, the actuators 102b could after a wide variety of characteristics in the process system. The sensors 102*a* and actuators 102b could represent any other or additional components in any suitable process system. Each of the sensors 102*a* includes any suitable structure for measuring one or more characteristics in a process system. Each of the actuators 102b includes any suitable structure for operating on or affecting one or more conditions in a process system, The sensors and actuators may be generally referred to as field devices.

At least one network 104 is coupled to the sensors 102*a* and actuators 102b. The network 104 facilitates interaction with the sensors 102*a* and actuators 102b. For example, the network 104 could transport measurement data from the sensors 102*a* and provide control signals to the actuators 102b. The network 104 could represent any suitable network or combination of networks. As particular examples, the network 104 could represent an Ethernet network, an electrical signal network (such as a HART or FOUNDATION FIELDBUS network), a pneumatic control signal network, or any other or additional type(s) of network(s).

In the Purdue model, "Level 1" may include one or more controllers 106, which are coupled to the network 104. Among other things, each controller 106 may use the measurements from one or more sensors 102*a* to control the operation of one or more actuators 102b. For example, a controller 106 could receive measurement data from one or more sensors 102*a* and use the measurement data to generate control signals for one or more actuators 102b. Multiple controllers 106 could also operate in redundant configurations, such as when one controller 106 operates as a primary controller while another controller 106 operates as a backup controller (which synchronizes with the primary controller and can take over for the primary controller in the event of a fault with the primary controller). Each controller 106 includes any suitable structure for interacting with one or more sensors 102*a* and controlling one or more actuators 102b. Each controller 106 could, for example, represent a multivariable controller, such as a Robust Multivariable Predictive Control Technology (RMPCT) controller or other type of controller implementing model predictive control (MPC) or other advanced predictive control (APC). As a particular example, each controller 106 could represent a computing device running a real-time operating system.

Two networks 108 are coupled to the controllers 106. The networks 108 facilitate interaction with the controllers 106, such as by transporting data to and from the controllers 106. The networks 108 could represent any suitable networks or combination of networks. As particular examples, the networks 108 could represent a pair of Ethernet networks or a redundant pair of Ethernet networks, such as a FAULT TOLERANT ETHERNET (FTE) network from HONEYWELL INTERNATIONAL INC.

At least one switch/firewall 110 couples the networks 108 to two networks 112. The switch/firewall 110 may transport traffic from one network to another. The switch/firewall 110 may also block traffic on one network from reaching another network. The switch/firewall 110 includes any suitable structure for providing communication between networks, such as a HONEYWELL CONTROL FIREWALL (CF9) device. The networks 112 could represent any suitable networks, such as a pair of Ethernet networks or an FTE network.

In the Purdue model, "Level 2" may include one or more machine-level controllers 114 coupled to the networks 112. The machine-level controllers 114 perform various functions to support the operation and control of the controllers 106, sensors 102*a*, and actuators 102b, which could be associated with a particular piece of industrial equipment (such as a boiler or other machine). For example, the machine-level controllers 114 could log information collected or generated by the controllers 106, such as measurement data from the sensors 102*a* or control signals for the actuators 102b. The machine-level controllers 114 could also execute applications that control the operation of the controllers 106, thereby controlling the operation of the actuators 102b. In addition, the machine-level controllers 114 could provide secure access to the controllers 106. Each of the machine-level controllers 114 includes any suitable structure for providing access to, control of, or operations related to a machine or other individual piece of equipment. Each of the machine-level controllers 114 could, for example, represent a server computing device running a MICROSOFT WINDOWS operating system. Although not shown, different machine-level controllers 114 could be used to control different pieces of equipment in a process system (where each piece of equipment is associated with one or more controllers 106, sensors 102*a*, and actuators 102b).

One or more operator stations 116 are coupled to the networks 112. The operator stations 116 represent computing or communication devices providing user access to the machine-level controllers 114. which could then provide user access to the controllers 106 (and possibly the sensors 102*a* and actuators 102b). As particular examples, the operator stations 116 could allow users to review the operational history of the sensors 102*a* and actuators 102b using information collected by the controllers 106 and/or the machine-level controllers 114. The operator stations 116 could also allow the users to adjust the operation of the sensors 102*a*, actuators 102b, controllers 106, or machine-level controllers 114. In addition, the operator stations 116 could receive and display warnings, alerts, or other messages or displays generated by the controllers 106 or the machine-level controllers 114. Each of the operator stations 116 includes any suitable structure for supporting user access and control of one or more components in the system 100. Each of the operator stations 116 could, for example, represent a computing device running a MICROSOFT WINDOWS operating system.

At least one router/firewall 118 couples the networks 112 to two networks 120. The router/firewall 118 includes any suitable structure for providing communication between networks, such as a secure router or combination router/firewall. The networks 120 could represent any suitable networks, such as a pair of Ethernet networks or an FTE network.

In the Purdue model, "Level 3" may include one or more unit-level controllers 122 coupled to the networks 120. Each unit-level controller 122 is typically associated with a unit in a process system, which represents a collection of different machines operating together to implement at least part of a process. The unit-level controllers 122 perform various functions to support the operation and control of components in the lower levels. For example, the unit-level controllers 122 could log information collected or generated by the components in the lower levels, execute applications that control the components in the lower levels, and provide secure access to the components in the lower levels. Each of the unit-level controllers 122 includes any suitable structure for providing access to, control of, or operations related to one or more machines or other pieces of equipment in a process unit. Each of the unit-level controllers 122 could, for example, represent a server computing device running a MICROSOFT WINDOWS operating system. Although not shown, different unit-level controllers 122 could be used to control different units in a process system (where each unit is associated with one or more machine-level controllers 114, controllers 106, sensors 102*a*, and actuators 102*b*).

Access to the unit-level controllers 122 may be provided by one or more operator stations 124. Each of the operator stations 124 includes any suitable structure for supporting user access and control of one or more components in the system 100. Each of the operator stations 124 could, for example, represent a computing device running a MICROSOFT WINDOWS operating system.

At least one router/firewall 126 couples the networks 120 to two networks 128. The router/firewall 126 includes any suitable structure for providing communication between networks, such as a secure router or combination router/firewall. The networks 128 could represent any suitable networks, such as a pair of Ethernet networks or an FTE network.

In the Purdue model, "Level 4" may include one or more plant-level controllers 130 coupled to the networks 128, Each plant-level controller 130 is typically associated with one of the plants 101 *a*-101 *n*, which may include one or more process units that implement the same, similar, or different processes. The plant-level controllers 130 perform various functions to support the operation and control of components in the lower levels. As particular examples, the plant-level controller 130 could execute one or more manufacturing execution system (MES) applications, scheduling applications, or other or additional plant or process control applications. Each of the plant-level controllers 130 includes any suitable structure for providing access to, control of, or operations related to one or more process units in a process plant. Each of the plant-level controllers 130 could, for example, represent a server computing device running a MICROSOFT WINDOWS operating system.

Access to the plant-level controllers 130 may be provided by one or more operator stations 132. Each of the operator stations 132 includes any suitable structure for supporting user access and control of one or more components in the system 100. Each of the operator stations 132 could, for example, represent a computing device running a MICROSOFT WINDOWS operating system.

At least one router/firewall 134 couples the networks 128 to one or more networks 136. The router/firewall 134 includes any suitable structure for providing communication between networks, such as a secure router or combination router/firewall. The network 136 could represent any suitable network, such as an enterprise-wide Ethernet or other network or all or a portion of a larger network (such as the Internet).

In the Purdue model, "Level 5" may include one or more enterprise-level controllers 138 coupled to the network 136. Each enterprise-level controller 138 is typically able to perform planning operations for multiple plants 101 *a*-101 *n* and to control various aspects of the plants 101 *a*-101 *n.* The enterprise-level controllers 138 can also perform various functions to support the operation and control of components in the plants 101 *a*-101 *n.* As particular examples, the enterprise-level controller 138 could execute one or more order processing applications, enterprise resource planning (ERP) applications, advanced planning and scheduling (APS) applications, or any other or additional enterprise control applications. Each of the enterprise-level controllers 138 includes any suitable structure for providing access to, control of, or operations related to the control of one or more plants. Each of the enterprise-level controllers 138 could, for example, represent a server computing device running a MICROSOFT WINDOWS operating system. In this document, the term "enterprise" refers to an organization having one or more plants or other processing facilities to be managed. Note that if a single plant 101 *a* is to be managed, the functionality of the enterprise-level controller 138 could be incorporated into the plant-level controller 130.

Access to the enterprise-level controllers 138 may be provided by one or more operator stations 140. Each of the operator stations 140 includes any suitable structure for supporting user access and control of one or more components in the system 100. Each of the operator stations 140 could, for example, represent a computing device running a MICROSOFT WINDOWS operating system.

Various levels of the Purdue model can include other components, such as one or more databases. The database(s) associated with each level could store any suitable information associated with that level or one or more other levels of the system 100. For example, a historian 141 can be coupled to the network 136. The historian 141 could represent a component that stores various information about the system 100. The historian 141 could, for instance, store information used during production scheduling and optimization. The historian 141 represents any suitable structure for storing and facilitating retrieval of information. Although shown as a single centralized component coupled to the network 136, the historian 141 could be located elsewhere in the system 100, or multiple historians could be distributed in different locations in the system 100.

In particular embodiments, the various controllers and operator stations in FIG. 1 may represent computing devices. For example, each of the controllers could include one or more processing devices 142 and one or more memories 144 for storing instructions and data used, generated, or collected by the processing device(s) 142. Each of the controllers could also include at least one network interface 146, such as one or more Ethernet interfaces or wireless transceivers. Also, each of the operator stations could include one or more processing devices 148 and one or more memories 150 for storing instructions and data used, generated, or collected by the processing device(s) 148. Each of the operator stations could also include at least one network interface, 152, such as one or more Ethernet interfaces or wireless transceivers.

Over time, a need or desire to upgrade one or more components in an industrial process control and automation system develops. However, it is rare for all components to be scheduled for an upgrade at the same time. Moreover, upgrading all components at the same time may increase a risk that may inadvertently negatively impacting process control. For instance, migration of all control strategies from a legacy controller to a modern controller in bulk (e.g., at the same time) may increase a risk in negatively impacting process control and/or increase an amount of time and/or difficulty to discern which particular migrated process control loop is the root cause of the negative impact on process control. Furthermore, migration from a legacy controller to a modern controller may need to be performed in situ without failure.

In the following description, a "legacy" controller refers to an existing controller not being replaced by a more recent, enhanced, or other device. A "legacy" protocol refers to a protocol used by a legacy controller, a "legacy" interface refers to an interface that supports the use of a legacy protocol, and a "legacy" network refers to a network that supports the use of a legacy protocol. A "modern" or "enhanced" or "upgraded" controller refers to a device that is replacing a legacy controller. An "enhanced" protocol refers to a protocol used by a modern or enhanced controller, an "enhanced" interface refers to an interface that supports the use of an enhanced protocol, and an "enhanced" network refers to a network that supports the use of an enhanced protocol. Note that the terms "migration" and "replacement" (and their derivatives), when used with reference to a legacy controller, include both a physical replacement of the legacy controller with a modern or enhanced controller and the integration of the modern controller within the system.

Turning to the controllers, each controller is connected to a network interface module (NIM) via a gateway. Each controller is also connected to an input/output (I/O) subsystem including an I/O link and I/O modules. Therefore, each controller has two communication parts, the universal control network (UCN) connection upon which communication are made to the NIM, and potentially to other devices on the UCN, and the second communication part to the I/O link. In some legacy systems the communication components each require physical hardware including one board for communication control and another board for the UCN interface and a third for the I/O link. In some legacy systems, the UCN interface uses a coax medium while in others the UCN interface was replaced with an ethernet medium.

Legacy controllers may have employed two microprocessors, in the communication and control function; one microprocessor for communications and the other microprocessor to support control functions. The I/O link function employed yet another microprocessor for I/O link communications; and the UCN interface employed yet another microprocessor which emulated the token bus interface with the UCN which was used in earlier versions. Thus, many legacy controllers have a total of 4 microprocessors, one supporting communications, one supporting control functions, one supporting the I/O link, and one supporting the UCN interface. An advancement of the upgraded controller is that all of the functionality of the four legacy microprocessors are implemented on a single microprocessor. Moving to this single microprocessor configuration allows a change from the legacy 8-bit microcontroller to commercially available FPGA. Having the modern architecture allows for adding the latest control technology as a parallel execution environment; adding additional networking supporting the latest modern forms of control and I/O integration, including an I/O mesh configuration; and adding on-board security features, such as firmware protection and encryption, to allow the node to work without an external control firewall.

Additionally, separate hardware for communication function and control function is now merged into a single interface. The new merged hardware is designed to be a drop-in replacement for the legacy hardware. For example, a new card is designed to be located in a legacy chassis to preserve the cabinet, power supply, redundancy path and other current features of existing systems. The modern controller is a drop-in replacement for a legacy controller and sits in the same backplane as that of the legacy controller.

In a legacy system, different components such as communication and control must share resources. For example, global memory is shared between the communication function and the control function and the redundant token bus controller (RTBC). Legacy systems use the RTBC to exchange data between redundant partners, the primary controller and the secondary controller, to synchronize the database. A modern controller must also be able to exchange data with a redundant partner, and therefore should be able to operate with RTBC protocols.

The modern controller has all the functionalities of a legacy controller and the additional enhancement features such as the modern control execution environment, all in the same platform, For example, the modern controller brings ethernet protocols for communication to downlink ethernet devices communicating over Modbus TCP/IP, IEC61850, HSRPRP/DLR and the like, but yet must also be compatible with the RTBC subsystem in the legacy controller for synchronization of the control database using a redundancy manager. The redundancy manager manages the legacy mode of redundancy communications as well as the modern ethernet private path-based redundancy depending on the platform type of the partner. Similarly, the modern controller supports the control execution environment (CEE) which is the control engine of the modem controller as well as simultaneously supporting the control engine of the legacy controller which may be parameter access server and point processing executive of the legacy controller system (PAS/PPX). Further there is a common database tracking mechanism, called a file system tracker (FST), which is used to synchronize the database of both CEE and PAS/PPX systems. In the embodiment where a modem controller is paired with a legacy partner often the CEE will not function as the legacy partner does not typically support the CEE system. In that hybrid partnership, with one modem controller paired with one legacy controller in a redundant system, it is the PAS; PP that will be running. The CEE will run when both the redundant partners, the primary and the secondary controllers are modern controllers which both support the CEE system. The file system tracker captures the database changes in the primary controller that corresponds to both CEE and PAS/PPX when the primary controller is a modern controller and then synchronizes the database changes with its redundant partner which is the secondary controller and is also a modern controller using the redundancy manager. The file system tracker captures the database changes in the primary controller that corresponds to the PAS/PPX system when the primary controller is a modern controller and secondary controller is a legacy controller and then synchronizes the database changes with its redundant partner.

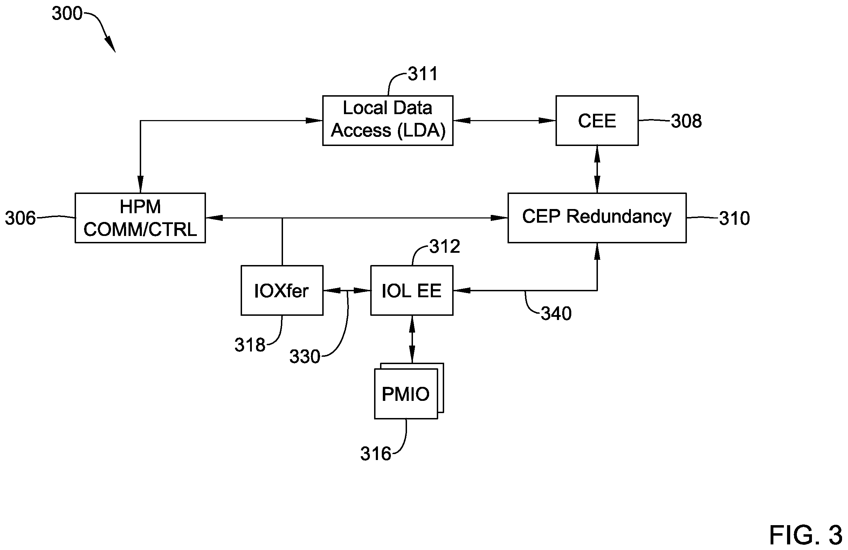

An advantage of the modern controller is the preservation of the address map of the controller's database so that it can retain fidelity with a legacy partner. In some embodiments, this allows for a fail-over upgrade during a failover event from a legacy controller to the modern controller. That is, I/O module ownership can be transferred from legacy control execution by a first process to a second process during a failover event (e.g., failover upgrade), all the while maintaining both legacy and new control executions along with local/peer/supervisory references (e.g., those stored in the LDA 311 in FIG. 3 or otherwise stored) to PMIO from multiple data access paths (EUCN and CDA). Transferring some or all assignment of the I/O modules, as detailed herein, during or responsive to a failover event can promote aspects herein such as promoting the on-process transfer of I/O module ownership. However, in some embodiments the I/O module ownership can be transferred from a first process to a second process in absence of a failover event.

Advantageously, when migrating to a modern controller, there is no change to the connection of the I/O link. In the Purdue model the level 1 controllers are connected to the IO modules on an I/O link network. Often the I/O modules have prefabricated cables that connect to the field termination assemblies. All field wiring terminates on the field termination assemblies. For example, the field wiring from the transmitters and the and field devices come to the field termination assemblies and connect to the I/O module via the prefabricated cables and the I/O module is connected to the controller though an I/O link medium such as a serial communication. Employing a modern controller does not affect the existing I/O modules, the field termination assemblies or the field devices. The communication and control hardware and the I/O link hardware is replaced though the use of the modern controller, but legacy I/O modules and existing connections are not altered even with the modern process architecture of the modern controllers. Thus, the modern controllers are compatible with the existing system of I/O modules, field termination assemblies, and field devices.

Software source code in each of the four microprocessors of the legacy controller may be a mix of legacy and modern coding language, Examples of legacy source code include Pascal code, Assembly code, and Field Programable Gate Array (FPGA). An example of modern coding language includes C/C++. A challenge in the modern controller was to run the same software platform with the same functionality as the legacy controller without rewriting the legacy source code for the modern platform. To accomplish this need, a translation mechanism is utilized. The translator takes the complied legacy source code generated from the legacy compliers and translates that compiled source code to modern source code depending on the target platform. See for example U.S. Pat. No. 10,248463 and U.S. Application No. 20170344364. With respect to at least the communication and control portion of legacy microprocessors, the move to the modern controller with a single microprocessor does not require changing or rewriting of the legacy communications and control source code. The complied output of the legacy source code is translated, built, and packaged to the target platform of the microprocessor of the modern controller. In other words, the source code from the obsolete, controller is translated to the latest micro machine code. With the source code being translated and built on the targeted platform, the communications and control functions must operate on the targeted platform just as if the operation was on the legacy operating system. The modern controller has an added thunking layer which allows for emulated MTOS and pascal runtime function thus retaining the compatibility with the legacy source code.

In some situations, binary code may be generated from the assembly source code using an assembler. The microprocessor itself may be run in a gate array, or a field programable gate array (FPGA). An intellectual property (IP) core is a block of logic or data that is used in making a FPGA or application specific integrated circuit (ASIC) for a product. In electronic designs semiconductor IP core or IP block is a reusable unit of logic, cell, or integrated circuit (commonly called a chip) layout design that is the intellectual property of a specific party. The IP may include control strategies, displays, control language programs, history configurations and so on. The IP is preserved as binary object that was previously supported on a legacy controller and are now supported without changes on the modern controller. Subtleties like the database format is of the legacy microprocessor type (Big Endian) irrespective of the target platform (Big or Little Endian), and also preserved the point reference ID which may be known as Internal Entity ID in the TPM/TPS context. An IP core can run like a microprocessor and runs the microprocessor functions but implemented in a gate array. The binary code may be loaded into the memory of IP core which in turn may then use the binary code. Therefore, in these situations, an IP core technique may use the binary code so that there is no change to the legacy source code, i.e, the binary code.

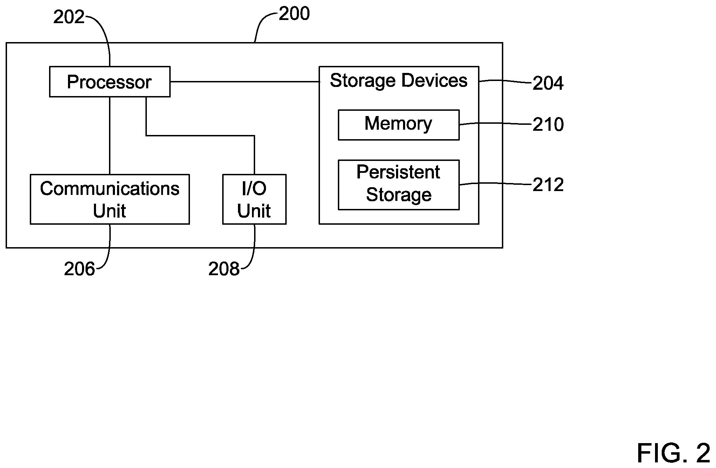

FIG. 2 illustrates an example device 200 supporting an apparatus and method for on process loop-by-loop control strategy migration from legacy control system to modern control systems according to this disclosure. The device 200 could, for example, denote an operator station or other higher-level components in the system 100 of FIG. 1. However, the device 200 could be used in any other suitable system, and a user interface supporting for on process loop-by-loop control strategy migration from legacy control system to modern control systems could be generated or used by any other suitable device.

As shown in FIG. 2, the device 200 includes at least one processor 202 (e.g., a single microprocessor), at least one storage device 204, at least one communications unit 206, and at least one input/output (I/O) unit 208. Each processor 202 can execute instructions, such as those that may be loaded into a memory 210. The instructions could be used to generate or display a user interface supporting on process loop-by-loop control strategy migration from legacy control system to modern control systems. Each processor 202 includes any suitable processing device, such as one or more microprocessors, microcontrollers, digital signal processors, application specific integrated circuits (ASICs), field programmable gate arrays (FPGAs), or discrete circuitry.

The memory 210 and a persistent storage 212 are examples of storage devices 204, which represent any structure(s) capable of storing and facilitating retrieval of information (such as data, program code, and/or other suitable information on a temporary or permanent basis). The memory 210 may represent a random-access memory or any other suitable volatile or non-volatile storage device(s). The persistent storage 212 may contain one or more components or devices supporting longer-term storage of data, such as a read only memory, hard drive, flash memory, or optical disc.

The communications unit 206 supports communications with other systems or devices. For example, the communications unit 206 could include a network interface card or a wireless transceiver facilitating communications over a wired or wireless network. The communications unit 206 may support communications through any suitable physical or wireless communication link(s).

The I/O unit 208 allows for input and output of data. For example, the I/O unit 208 may provide a connection for user input through a keyboard, mouse, keypad, touchscreen, or other suitable input device. The I/O unit 208 may also send output to a display, printer, or other suitable output device.

In some embodiments, the device 200 shown in FIG. 2 forms part of an operator station such as the operator station 140, 132, 124, and/or 116 illustrated in FIG. 1. In these embodiments, the one or more processors 202 can generate graphical displays (such as human-machine interface or "HMI" displays) for presentation on one or more display screens of the operator station 118. A suitable I/O unit 208 can be used to support the presentation of the graphical displays on the one or more display screens of the operator station 118.

In other embodiments, the device 200 shown in FIG. 2 represents a device separate from an operator station. For example, the device 200 could represent a server or other device that communicates with one or more operator stations over one or more networks. In those embodiments, the one or more processors 202 can generate HMI or other graphical displays, and data defining the graphical displays can be transmitted to an operator station, mobile device, or other device, such as via a suitable communications unit 206. A communications unit of the operator station, mobile device, or other device receives the data, and one or more processors of the operator station, mobile device, or other device process the data and present the graphical displays on one or more display screens.

However the functionality is implemented, the graphical displays presented on one or more operator stations 118 can include a common user interface that provides on process loop-by-loop control strategy migration from legacy control system to modern control systems, and thereby permits operations, monitoring, and maintenance of legacy and modern control systems. The information used to generate the common user interface and other graphical displays could be received directly from one or more sources (such as the controllers in FIG. 1). The information used to generate the common user interface and the other graphical displays could also or alternatively be received indirectly from one or more sources, such as via the historian 141.

Although FIG. 2 illustrates one example of a device 200 for on process loop-by-loop control strategy migration from legacy control system to modern control systems, various changes may be made to FIG. 2. For example, components could be added, omitted, combined, further subdivided, or placed in any other suitable configuration according to particular needs. Also, computing devices can come in a wide variety of configurations, and FIG. 2 does not limit this disclosure to any particular configuration of computing device.

FIG. 3 illustrates a portion of an example process controller 300 having a first communication path 330 and a second communication path 340 for on process loop-by-loop control strategy migration from legacy control system to modern control systems according to this disclosure. As illustrated in FIG. 3, the process controller 300 is communicatively coupled to an input/out component such as a process manager input/output (PMIO) 316. The on process loop-by-loop control strategy migration described herein can be employed with an individual process controller (e.g., without having an change any hardware of the individual process controller) such as the process controller 300 or can be implemented with a plurality of process controllers (e.g., a legacy process controller and a modern process controller), as described herein.

The process controller 300 includes an input/output (I/O) link execution environment manager (IOL EE) 312. Unlike other approaches that employ a redundant token bus controller (RTBC) the approaches herein employ the IOL EE 312 in an absence of a RTBC. For instance, employing the IOL EE 312 can permit formation of communications paths that permit the same level of access (e.g., primary access) to both a first process 306 and a second process 308 at the same time. As used herein, the first process 306 and the second process 308 refer to separate instances of a software processes or routines running on hardware of a process controller such as the process controller 300. While FIG. 3 illustrates both the first process 306 and the second process 308 running on the same controller (process controller 300), in some instances, the first process 306 can be hosted by a first controller and the second process 308 can be hosted by a second (different) controller. In such embodiments, the first controller and second controller can be included in the same (individual) process controller or may be hosted by separate process controllers.

The process controller 300 includes one or more controllers hosting the first process 306 and a second process 308. For instance, in some embodiments the first process 306 and the second process 308 can be hosted be an individual controller (e.g., including an individual microprocessor). However, in some embodiments the first process 306 and the second process 308 can be hosted respectively by a redundant pair of controllers.

The first process 306 can run on hardware that is coupled via the first communication path 330 to the IOL EE 312. The first process 306 is also coupled via the first communication path 330 and the IOL EE 312 to the PMIO 316. For instance, the process controller 300 can include an IO request transfer (IOXfer) component 318, and the first process 306 can run on hardware that is coupled via the first communication path that extends from the hardware of the first process 306 through the 318 and the IOL EE 312 to the PMIO 316, as illustrated in FIG. 3. In some embodiments, the IOXfer component 318 can redirect IO transactions. For example, the IOXfer component 318 can redirect IO transactions from the legacy control execution (PPX) side to the modern control execution (IOLEE) side, for instance, while bridging any protocol gap that may exist between PPX side and the IOL EE side. The IOXfer 318 component can perform reply processing. For instance, the IOXfer component 318 can perform reply processing from the IOL EE side and direct a reply back to the PPX side, in some instances.

The second process 308 is coupled via a second communication path 340 to the IOL EE 312. The second process 308 is also coupled via second communication path 340 to the PMIO 316. For instance, second process 308 can be coupled via the second communication path 340 that extend from the second process 308 through the IOL EE 312 to the PMIO 316, as illustrated in FIG. 3. It is noted that FIG. 3 includes only an illustrative portion of the process controller 300 (e.g., illustrating the first and second communication paths 330, 340), and that the process controller 300 can include additional components and/or an alternate arrangement of components than those illustrated in FIG. 3.

As mentioned, the first communication path 330 can provide the first process 306 with the same level of access (e.g., primary access) to the PMIO 316. Thus, unlike previous approaches that relied on a legacy (first) controller to permit a modern (second) controller to communicate with the PMIO, the approaches herein can permit both the second process 308 and the first process 306 running on the individual process controller 300 to directly access to the PMIO. For instance, as detailed herein a first communication path 330 does not extend through the hardware running the second process 308 and a second communication path 340 does not extend through the hardware running the first process 306. This direct access of the PMIO 316 by the first process 306 and the second process 308 can promote aspects herein such as promoting the on process loop-by-loop migration, as detailed herein. The process controller 300 can include additional elements and/or alternate arrangement of elements.

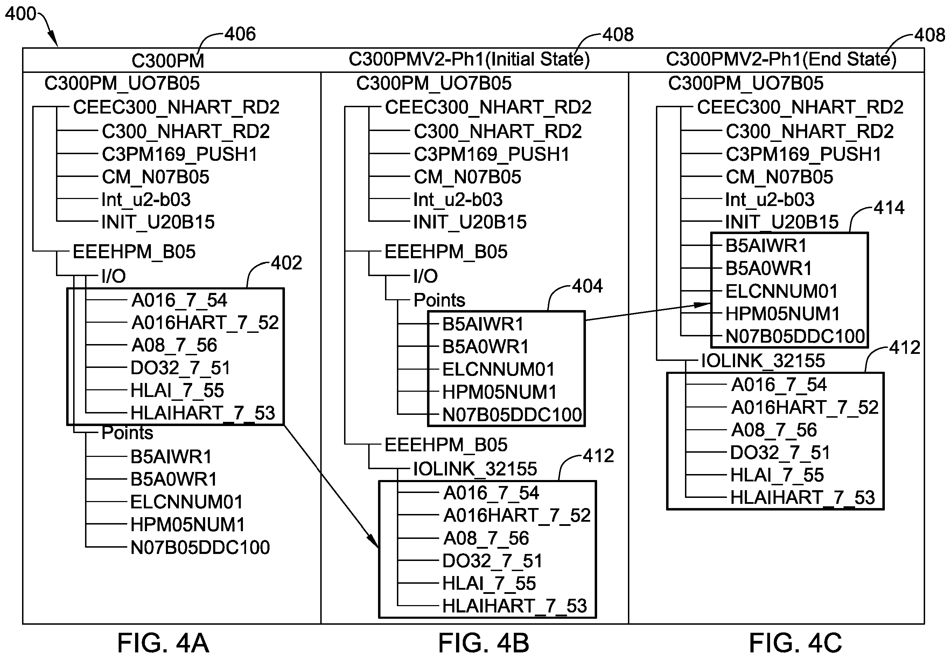

FIGS. 4A, 4B, and 4C illustrate an example user interface 400 supporting for on process loop-by-loop control strategy migration from legacy control system to modern control systems according to this disclosure. In this particular example, the user interface 400 is associated with EXPERION control system components and can be used to present control strategies (e.g., I/O modules) associated with those components and with TDC3000 legacy control system components. However, other legacy and modern control system components could be used, and it is expected that today's "modern" control system components will be "legacy" control system components at some point in the future.

As shown in FIG. 4A, 4B, and 4C, the user interface 400 can include at least one graphical representation 402 of at least part of a control system or an underlying industrial process that is managed or controlled using the control system. The control system illustrated in the graphical representation 402 can include one or more I/O modules. The I/O modules may be associated with various control system components such as controllers, gateways, sensors, actuators, or any other or additional components in a control system or an underlying industrial process. Each I/O module can be identified using text and/or graphical representation thereof, among other possibilities. The graphical representation 402 represents a first subset of I/O modules and thus represents the setup of at least part of a control environment for an industrial facility or portion thereof.

As shown in FIG. 4A, the user interface 400 can be configured to display a graphical representation of the first set of I/O modules and corresponding control execution functions in the first process prior to the on process migration. Similarly, the user interface 400 can be configured to display a graphical representation of a graphical representation of the second set of I/O modules and corresponding control execution functions in the second process prior to the on process migration.

For instance, as shown in FIG. 4A, the graphical representation 402 of the first subset of I/O modules can be associated with a first process (represented as element 406) of a process controller. In such instances, an industrial process can be controlled by the first process 406 in accordance with a first control strategy that employs that first subset of I/O modules (and the corresponding control functions). Stated differently, the first process 406 can have primary access and supervisory control of various components herein (e.g., a PMIO).

As shown in FIG. 4B, the first subset of I/O modules in the graphical representation 402 has been migrated from the first process 406 of the process controller to the second process 408 of the process controller to form a second set of I/O modules. A graphical representation 412 of the second set of I/O modules indicates that all of the first set of I/O modules have been migrated from the first process 406 to the second process 408.

As detailed herein migration can refer to the on process transfer of control or associations with I/O modules and/or other components from a first (legacy) controller to a second (modern) controller. As used herein "on process" refers to the normal (runtime) operation of an industrial process. For instance, at least due to hosting a first control execution environment (with a first controller) and hosting a second control execution environment (with the first controller or with a second controller) and providing the first process and the second process the same level (e.g., primary level) access to the PMIO the approaches herein can permit on-process migration of control strategies. Thus, unlike some other approaches that require downtime to migrate or update a control strategy, the methods herein can occur entirely on process. As an example, a first database, collection of object, functions, and/or other information linking the I/O modules to the first process 406 can be updated (or translated) on process to form a second database (e.g., a in XML format or another format), collection of objects, functions, and/or other information linking the same I/O modules to the second process 408. For instance, this can permit end users to interactively transfer on a loop-by-loop basis from first process to a second process, such as from a first process hosted by a legacy controller (e.g., a legacy first controller) to a second process hosted by a modern controller (e.g., a modern second controller) such as an EXPERION controller. Stated differently, in some embodiments, an individual control loop and corresponding I/O modules can be migrated at a given time. Migration of an individual control loop at a given time can promote aspects herein. However, in some embodiments, groups of control loops, but not all of the control loops, and corresponding I/O modules can be migrated at the same time from the first process to the second process (e.g., within the same individual process controller or from a first process controller to a second process controller).

During migration, control of the industrial process can be maintained with the first (legacy) process. For instance, control of the industrial process can be maintained with the first (legacy) process until each individual control loops is migrated from the first process to a different (e.g., second process). Stated differently, the first process 406 can have primary access to and supervisory control of various components herein (e.g., a PMIO). Subsequent to migration of one or more of the control loops (e.g., I/O modules corresponding to one or more control loops) control of the industrial process can be migrated to the second (modern) process. Stated differently, the second process 408 can have primary access to an supervisory control of various components herein (e.g., a PMIO). For instance, control can be migrated on a loop-by-loop basis from the first process to the second process. However, in some instances, control can be migrated responsive to a group (e.g., a plurality) of control loops or all control loops being migrated from a first process to a second process.

As illustrated in FIG. 4C, the graphical representation 412 of the second set of I/O modules indicates that all of the first set of I/O modules have been and remain migrated from the first process 406 to the second process 408. Additionally, a graphical representation 414 indicates that all of the corresponding control functions have been migrated from the first process 406 to the second process 408. Stated differently, ownership and control of the I/O modules has been transferred from the first process 406 to the second process 408. While FIGS. 4A, 4B, and 4C illustrate a given quantity and entirety of the I/O modules and corresponding control functions being transferred, the quantity of I/O modules and corresponding control functions that are transferred can vary. For instance, any quantity of I/O modules and corresponding control functions include in one or more control loops can be transferred at a given time.

The user interface 400 allows different functions to be invoked or options to be selected using more modern input/output mechanisms (such as drop-down menus and mouse right-clicks). For example, a user could use a mouse to click on an image or icon of an I/O module to cause the I/O module or a group of I/O modules to be migrated from a first process to a second process, as described herein. In some embodiments, the I/O modules and corresponding control functions can be presented in a list or menu; however, other presentations or representations are possible.

The user interface allows representations of one or more I/O modules controlled by a plurality of controllers to be displayed. For instance, the user interface 400 can, in some embodiments, display representations of one or more I/O modules controlled by a first process and one or more I/O modules controlled by a second process. In some embodiments, the user interface 400 can be configured to display one or more I/O modules controlled by a first process and one or more I/O modules controlled by a second process at the same time. The hybrid view may promote aspects herein such as promoting on process loop-by-loop migration of the I/O modules and corresponding control functions. The user interface 400 in FIG. 4A, 4B, and 4C could be generated by any suitable component, such as an operator station or server. The user interface 400 in FIGS. 4A, 4B, 4C could also be presented using any suitable component, such as an operator station or a user's mobile device.

As shown in FIG. 4C, the user interface 400 can be configured to display a graphical representation of the second set of I/O modules and corresponding control execution functions in the second process subsequent to the on process migration. Similarly, the user interface 400 can be configured to display a graphical representation of a graphical representation of any remaining component (e.g., any remaining I/O modules) of the first set of I/O modules and corresponding control execution functions in the first controller subsequent to the on process migration.

In some embodiments, the user interface 400 can be configured to display a graphical representation of the first set of I/O modules and corresponding control execution functions in the process controller prior to the on process migration; a graphical representation of the second set of I/O modules and corresponding control execution functions in the process controller prior to the on process migration; a graphical representation of the first set of I/O modules and corresponding control execution functions in the first process subsequent to the on process migration; a graphical representation of the second set of I/O modules and corresponding control execution functions in the second process subsequent to the on process migration; or any combination thereof.

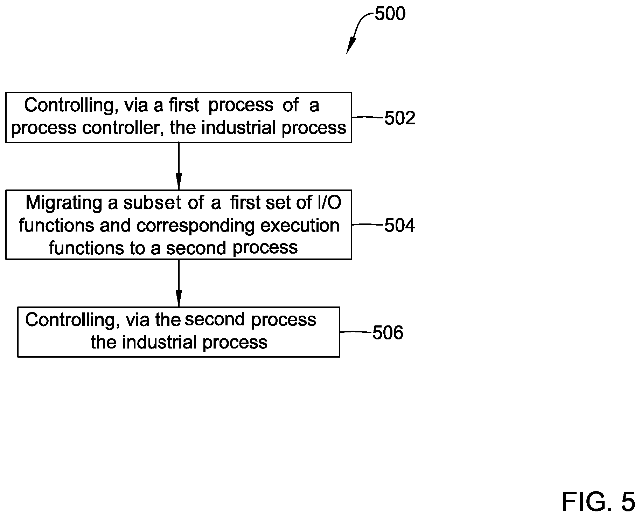

Although FIG. 4 illustrates one example of a user interface 400 supporting aspects herein, various changes may be made to FIG. 5. For example, the user interface 400 shown here relates to a specific implementation involving TDC3000 and EXPERION control systems, and other component models could be implemented with any suitable components to facilitate communications between any suitable legacy and modern control systems.

FIG. 5 illustrates an example method 500 for on process loop-by-loop control strategy migration from legacy control system to modern control systems according to this disclosure. The method 500 can be performed with one or more of the devices, apparatus, and systems herein.

At 502, the method 500 can include controlling, via a first process of a process controller, the industrial process. As detailed herein, the hardware hosting the first process of the of the process controller is coupled, via a first communication path, to IOL EE. As detailed herein, the process controller comprises a microprocessor (e.g., a single microprocessor)) configured to host a first control execution environment to support a first set of I/O functions and corresponding control execution functions to control the industrial process.

At 504, the method 500 can include migrating a subset of the first set of I/O functions and corresponding control execution functions to a second process of the process controller to form a second set of I/O functions and corresponding control functions. As detailed herein, the hardware hosting the second process can be coupled, via a second communication path, to the IOL EE (and an interface such as the PMIO). As detailed herein, the microprocessor (e.g., the single microprocessor) of the process controller can be configured to host a second control execution environment to support the second set of I/O functions and the corresponding control execution functions to control the industrial process. As mentioned, in some embodiments the first control execution environment can be hosted by the process controller in parallel with the second control execution environment hosted by the process controller, to permit or promote aspects herein.

In some embodiments, the migration at 504 can occur responsive to a user selection, as detailed herein. However, in some embodiments some or all of the migration at 504 can occur automatically (in the absence of any or a subsequent user selection). For instance, a user may select an initial control loop and/or an initial I/O module for migration. In such instances, additional control loop and/or additional I/O migration may occur automatically. For example, the user may select an individual control loop within a group of control loops and the methods herein may migrate the selected control loop and subsequently migrated one or more (e.g., all of) the remaining controller loops within the same control loop group, among other possibilities.

At 506, the method 500 can include controlling, via second process, the industrial process based on the second set of I/O modules and the corresponding control execution functions, as detailed herein. For instance, the method 500 can include controlling the industrial process via monitoring and/or otherwise interacting with I/O modules included in the second set of I/O modules.

As mentioned, some or all aspects of the method 500 can be performed on process. For instance, each of 502, 504, and 506 can be performed on process. As mentioned, some or all aspects of the method 500 can be performed without altering (in an absence of alteration) hardware of the components herein. For instance, each of 502, 504, and 506 can be performed in the absence of modifying hardware in a process controller or hardware coupled to the process controller (e.g., an individual process controller), described herein. In some embodiments where two separate controllers are employed, the method 500 can be performed in absence of altering hardware of a first controller, a second controller, or both the first controller and the second controller. For instance, the method 500 can be performed without modifying any of the hardware of the first controller and without modifying any of the hardware of the second controller in some embodiments.

In some embodiments, various functions described in this patent document are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random-access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable storage device.

It may be advantageous to set forth definitions of certain words and phrases used throughout this patent document. The terms "application" and "program" refer to one or more computer programs, software components, sets of instructions, procedures, functions, objects, classes, instances, related data, or a portion thereof adapted for implementation in a suitable computer code (including source code, object code, or executable code). The term "communicate," as well as derivatives thereof, encompasses both direct and indirect communication. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present application should not be read as implying that any particular element, step, or function is an essential or critical element that must be included in the claim scope. The scope of patented subject matter is defined only by the allowed claims. Moreover, none of the claims invokes 35 U.S.C. § 112(f) with respect to any of the appended claims or claim elements unless the exact words "means for" or "step for" are explicitly used in the particular claim, followed by a participle phrase identifying a function. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves, and is not intended to invoke 35 U.S.C. § 112(f).

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method of on process loop-by-loop control migration from a legacy control system to a modern control system for control of an industrial process, the method comprising:
controlling, via a first process of a process controller, the industrial process, wherein the process controller is coupled, via a communication path, to an input/output (I/O) link execution environment manager (IOL EE), the process controller comprising a microprocessor configured to host a first control execution environment to support a first set of I/O functions and corresponding control execution functions to control the industrial process;
migrating a subset of the first set of I/O functions and corresponding control execution functions to a second process of the process controller to form a second set of I/O functions and corresponding control functions, wherein the microprocessor is configured to host a second control execution environment to support the second set of I/O functions and the corresponding control execution functions to control the industrial process; and
controlling, via second process, the industrial process based on the second set of I/O functions and the corresponding control execution functions.

2. The method of claim 1, further comprising migrating the subset of the first set of I/O functions during normal operation of the industrial process.

3. The method of claim 1, wherein the first control execution environment is hosted by the process controller in parallel with the second control execution environment.

4. The method of claim 1, wherein the method is performed in an absence of altering hardware of the process controller.

5. The method of claim 1, wherein the subset of the first set of I/O functions and corresponding control execution functions correspond to an individual control loop for controlling the industrial process.

6. The method of claim 5, further comprises migrating additional I/O functions of the first set of I/O functions and corresponding control execution functions for each individual control loop of a plurality of control loops in a control loop group until each individual control loops is migrated from the first process to the second process.

7. The method of claim 6, further comprising maintaining supervisory control of one or more control loops for the industrial process with the first process until all of the individual control loops have been migrated from the first process to the second process.

8. The method of claim 7, further comprising changing supervisory control of the industrial process to the second process subsequent to migrating all of the plurality of control loops over.

9. The method of claim 1, further comprising migrating at least the subset of the first set of I/O functions and corresponding control execution functions to the second process during a failover event.

10. The method of claim 1, further comprising
generate a graphical user interface with information associated with the process controller;
initiate presentation, in the graphical user interface, of at least a portion of the information associated with a first set of I/O modules and control execution functions for controlling the industrial process;
receive, from a user via the graphical user interface, a selection of one or more of the first set of I/O modules and control execution functions for migration; and
migrating the selected I/O modules and control execution functions from the first process to the second process.

11. The method of claim 10, further comprising migrating a remaining subset of the first set of I/O modules and control execution functions automatically.

12. An apparatus comprising:
at least one microprocessor configured to:
control, via first control execution environment hosted by a process controller, an industrial process;
generate a graphical user interface with information associated with a first execution environment;
present, in the graphical user interface, of information representative of a first set of I/O modules and control execution functions supported by the first execution control environment to control the industrial process;
receive, from a user via the graphical user interface, a selection of a subset of the first set of I/O modules and the corresponding control execution functions;
perform on process migration of the selected subset of the first set of the I/O modules and the corresponding control execution functions from a first process to a second process hosted by the process controller as a second set of I/O modules and corresponding control execution functions; and
control, via a second execution environment hosted by the process controller and the second set of I/O modules and corresponding control execution functions, the industrial process.

13. The apparatus of claim 12, wherein the graphical user interface comprises:
a graphical representation of the first set of I/O modules and corresponding control execution functions in the process controller prior to the on process migration;
a graphical representation of the second set of I/O modules and corresponding control execution functions in the process controller prior to the on process migration;
a graphical representation of the first set of I/O modules and corresponding control execution functions in the first process subsequent to the on process migration;
a graphical representation of the second set of I/O modules and corresponding control execution functions in the second process subsequent to the on process migration; or
any combination thereof.

14. The apparatus of claim 12, wherein the microprocessor is an individual microprocessor.

15. A process controller for an industrial process, the process controller comprising:
an input/output (I/O) link execution environment manager (IOL EE);
a first controller coupled, via a first communication path, to IOL EE, the first controller comprising a microprocessor configured to host a first control execution environment to support a first set of I/O modules and control execution functions for controlling the industrial process; and
a second controller coupled, via a second communication path, to the IOL EE, the second controller comprising a microprocessor being configured to host a second control execution environment to support a second set of I/O functions and control execution functions for controlling the industrial process.
